# EUROPEAN PATENT APPLICATION

(11) **EP 1 564 967 A1**
(43) Date of publication of application: **17.08.2005**
(21) Application number: 02783587.5
(22) Date of filing: 21.11.2002
(51) Int. Cl.: H04M 1/02, H04N 5/225

(54) **PORTABLE APPARATUS**

(71) Applicant: MITSUBISHI DENKI KABUSHIKI KAISHA, Tokyo 100-8310 (JP)
(72) Inventor: NISHIMURA, Hiroyuki, Mitsubishi Denki K. K., Chiyoda-ku, Tokyo 100-8310 (JP)
(74) Representative: Sajda, Wolf E., Dipl.-Phys.
(86) International application number: PCT/JP2002/012170
(87) International publication number: WO 2004/047412

(57) **Abstract**

In a mobile device that includes two displays and is foldable, it is necessary to unfold a part having been folded before starting call. In the case of a mobile device further including any imaging device, an image to be taken cannot be confirmed from a subject side. According to a mobile device of the invention, a display side housing (100) is connected via a hinge (3) to a body (2) including an operation section (8) to be foldable. The display side housing (100) consists of a lower housing (1) connected to the hinge (3) and an upper housing (51) connected to the lower housing (1) to be invertible. An imaging device (6) is provided on one face of the lower housing (1), and a first display (4) is on the other face. A second display (54) is provided on one face of the upper housing (51). Any image to be taken can be displayed on both displays. (FIG. 1)

## Description

### Technical Field

The present invention relates to a mobile device that includes an imaging device and possesses a folding structure.

### Background Art

In mobile information terminal devices (hereinafter, they are also referred to as mobile devices or mobile information devices; and they include a mobile phone, a mobile, a mobile radio set, and additionally an information terminal device), characters and images are displayed as non-audio information such as e-mail, Internet, game, etc. Therefore, the mobile information terminal devices need to be provided with a display, and it is an increasing trend that the display has a larger screen.

On the other hand, mobility of mobile information terminal devices is regarded as important. A mobile information device capable of being small-sized, and capable of being easily carried although it is provided with a display of a large screen, has such a structure as shown in Patent Document 1:Patent Document 1, the Japanese Patent Publication (examined) No. 3189818, Fig. 6.

A mobile device that is disclosed in the above-mentioned patent document includes, as main components, a display side housing, an operation side housing, and a hinge providing a connection therebetween. In the following description, with either of the display side housing or of the operation side housing, the sides on which the display side housing and the operation side housing are in contact with each other at the time of being folded are referred to as the front side, and the sides on which they are in no contact (the outsides at the time of being folded) are referred to as the backside.

In normal, a mobile device is provided with a receiver (speaker) at the upper portion on the front side of the display side housing, a key operation section (hereinafter, referred to as operation section) on the front side of the operation side housing, and a transmitter (microphone) at the lower portion on the front side. Electronic circuit devices, battery, antenna and the like necessary for communication are contained therein, although not shown.

Although not particularly specifying that a description be made about a folding type, all mobile devices described hereinafter are of folding type. Since neither receiver nor transmitter is present on the outer surface in the folded state, an operational problem exists in that the audio call cannot be made in this folded state, and that a call cannot be made until the device is unfolded even when any call is incoming.

Furthermore, with reference to Fig. 2 of Patent Document 1, a mobile device possessing such a construction that the whole of the display side housing 81 can be inverted. A second transmitter is provided at a first hemispherical part of the connection; and a second receiver is provided on the opposite side (backside) of a main display, thereby enabling to make an audio call in the folded state. In this folding-type mobile device, assuming that an imaging device is provided, a problem of operational visibility exists in that an image cannot be confirmed at the time of taking a shot of one's own face in the case where this imaging device is located on the backside of the main display. A further problem of operational visibility exists in that an image cannot be confirmed at the time of taking a shot of, e.g., landscape in the case where the imaging device is located in the same direction as that of the main display.

Moreover, not only in the mobile device equipped with an imaging device as mentioned above but also in the conventionally general camera, a person to be a subject or a person who takes a picture using self-timer cannot confirm his own posture, pose, or facial expression to be photographed. Thus, such a mistake as taking a picture in which no head is caught often occurs.

The present invention was made in view of the conventional problems as described above, and has an object of obtaining a mobile device that includes an imaging device and is capable of being folded, and has improved operability and portability.

### Disclosure of the Invention

A mobile device according to the invention comprises:
a body 2 including an operation section 8;
a lower housing 1 that has front-back two faces, includes on one face a first display 4 capable of displaying an image, and is connected to the mentioned body 2 via a hinge so as to be foldable:
   an upper housing 51 that has front-back two faces, includes on one face a second display 54 capable of displaying an image, and is connected to the mentioned lower housing 1 via an inverting mechanism 11 inverting about a shaft substantially parallel with a face of the mentioned first display; and
   an imaging device 6, which is mounted onto either of the mentioned lower housing or of the mentioned upper housing, and in which image taking is operated by the mentioned operation section and an image having been taken is displayed on the mentioned first display or the mentioned second display.

As a result of such a construction, the second display can be used in an invertible manner, facing on the front side or on the backside of the mobile device, thus an advantage exists in such an improved operational visibility that one's posture, pose, and expression to be photographed can be confirmed also from the side of a subject.

Furthermore, a transmitter is provided at a position located on the mentioned hinge, which comes on the outside when the mentioned lower housing is folded, and comes on the inside when the mentioned lower housing is opened, thus enabling to transmit in the state of being folded.

In such a construction, it is possible to make the audio call even in the state of being folded, advantageously resulting in improved operability.

### Brief Description of the Drawings

- Fig. 1: is a perspective view taken from the front side showing a state in which a display of a display side housing is set on the front side to be opened in a mobile device according to a first preferred embodiment of the present invention.
- Fig. 2: is a perspective view taken from the backside of Fig. 1.
- Fig. 3: is a partially exploded view of Fig. 1.
- Fig. 4: is a partially detailed view of the structure of Fig. 3.
- Fig. 5: is a perspective view showing a state in which a second display of Fig. 1 is set on the front side to be folded.
- Fig. 6: is a perspective view showing a state in which the display of Fig. 5 is set on the backside to be folded.
- Fig. 7: is an explanatory view when taking an image of a person in the state in which the display of the display side housing is set on the backside to be opened.
- Fig. 8: is an explanatory view taking the state of Fig. 7 from the subject side.
- Fig. 9: is an explanatory view when taking an image of a person with the use of self-timer in the state in which the display of the display side housing is set on the backside to be opened.
- Fig. 10: is an explanatory view when taking one's own picture in the state in which the display (a second display) of the display side housing is set on the backside to be closed.
- Fig. 11: is a view showing an example of use in which both display screens of the first and second displays are character screens.
- Fig. 12: is a view showing an example of use in which both display screens of the first and second displays are image screens.
- Fig. 13: is a view showing an example of use in which the first display is an image screen, and the second display is a character screen.
- Fig. 14: is a view showing an example in which the first display is a character screen, and the second display is an image screen.
- Fig. 15: is a view showing an example of use in which the first display is a guide row screen, and the second display is a character screen.
- Fig. 16: is a view showing an example of use in which the first display is a guide row screen, and the second display is an image screen.
- Fig. 17: is a perspective view showing a state in which the second display is set on the backside to be opened in a mobile device according to a second embodiment of the invention.
- Fig. 18: is a perspective view of the mobile device of Fig. 17 taken from the backside.
- Fig. 19: is a perspective view showing the state in which the second display is set on the front side to be folded in the mobile device of Fig. 17.
- Fig. 20: is a perspective view showing the state in which likewise the second display is set on the backside to be folded.
- Fig. 21: is a perspective view taken from the front side showing a state in which the second display is set on the front side in a mobile device according to a third embodiment of the invention.
- Fig. 22: is a perspective view of the mobile device of Fig. 21 taken from the backside.
- Fig. 23: is a perspective view showing the state in which the second display of the mobile device of Fig. 21 is set on the front side to be folded.
- Fig. 24: is a perspective view showing the state in which the second display is set on the backside to be folded in the mobile device of Fig. 23.
- Fig. 25: is a perspective view from the front side showing a state in which the second display is set on the front side to be opened in a mobile device according to a fourth embodiment of the invention.
- Fig. 26: is a perspective view of the mobile device of Fig. 25 taken from the backside.
- Fig. 27: is a perspective view showing the state in which the mobile device of Fig. 26 is folded.
- Fig. 28: is a perspective view showing the state in which the second display of the mobile device of Fig. 25 is set on the backside to be folded.
- Fig. 29: is a perspective view showing a state in which the second display is set on the front side to be opened in a mobile device according to a fifth embodiment of the invention.
- Fig. 30: is a perspective view of the mobile device of Fig. 29 taken from the backside.
- Fig. 31: is a perspective view showing the state in which a display side housing of the mobile device is Fig. 29 is folded.
- Fig. 32: is a perspective view showing the state in which displays of the mobile device of Fig. 31 are set on the backside to be folded.
- Fig. 33: is a perspective view showing a state in which the second display is set on the front side to opened in a mobile device according to a sixth embodiment of the invention.
- Fig 34: is a perspective view of the mobile device of Fig. 33 taken from the backside.
- Fig. 35: is a perspective view of the mobile device of Fig. 34 being folded.
- Fig. 36: is a perspective view showing the state in which the second display of the mobile device of Fig. 35 is set on the backside to be folded.
- Fig. 37: is a perspective view from the front side showing a state in which the second display is set on the front side to be opened in a mobile device according to a seventh embodiment of the invention.
- Fig. 38: is a perspective view of the mobile device of Fig. 37 taken from the backside.
- Fig. 39: is a perspective view of the mobile device of Fig. 38 being folded.
- Fig. 40: is a perspective view showing the state in which the second display of the mobile device of Fig. 39 is set on the backside to be folded.
- Fig. 41: is a perspective view showing a state in which displays of a display side housing is set on the front side to be opened in a mobile device according to an eighth embodiment of the invention.
- Fig. 42: is an exploded perspective view explaining the construction of the mobile device of Fig. 41.
- Fig. 43: is a perspective view showing the state in which the mobile device of Fig. 41 is folded.
- Fig. 44: is a perspective view showing the state in which the second display of the mobile device of Fig. 43 is set on the backside to be folded.
- Fig. 45: is a perspective view showing a mobile device according to a ninth embodiment of the invention.

### Best Mode for Carrying Out the Invention

### Embodiment 1.

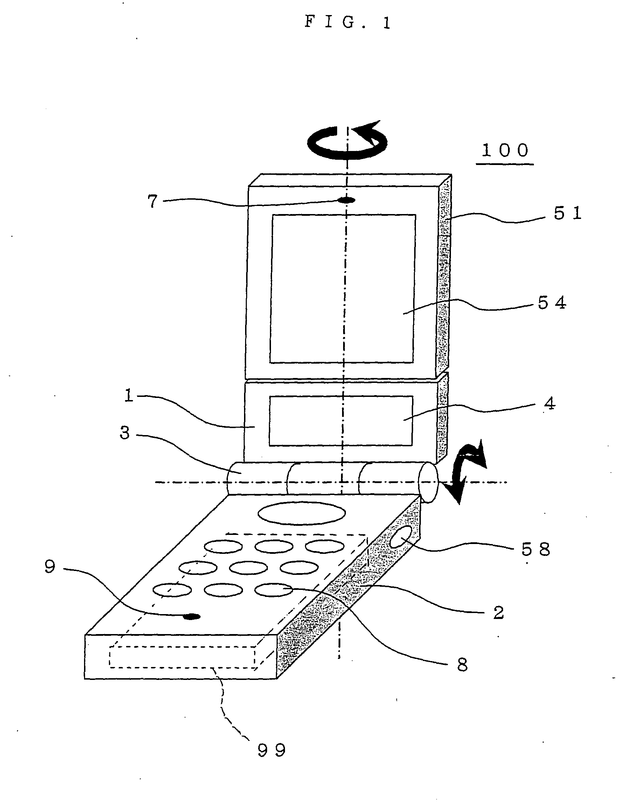

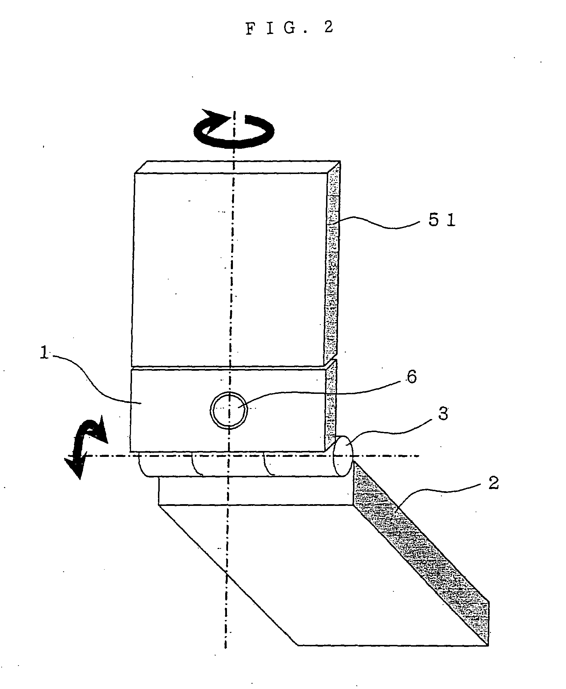

Fig. 1 is a perspective view of a mobile device capable of being folded (hereinafter, it is also referred to as mobile information terminal, and it includes a mobile phone, mobile, and mobile radio set) according to a first preferred embodiment of the present invention. Fig. 2 is a perspective view taken from the back face of Fig. 1. As shown in Figs. 1 and 2, this mobile device includes a display side housing 100 consisting of a lower housing 1 that is provided with a hinge 3 and an upper housing 51 that is connected through a turning mechanism (not shown) so as to be capable of inverting with respect to this lower housing 1. An operation side housing (referred to as body as well) 2 that includes an operation section 8 is connected to the hinge 3.

A receiver (speaker) 7 is provided at the upper portion on the front face side of the display side housing 100, and a key operation section (hereinafter, referred to as an operation section) is provided on the front side of the operation side housing 2, and a transmitter (microphone) 9 is provided at the lower portion on the front side of the operation side housing 2. Furthere, as needed, electronic circuit devices, battery, antenna or the like, which are necessary for communication (referred to as communication means 99 as a generic term) are contained therein. Both the transmitter and the receiver are connected to the communication means 99. A side key 58 for use in switching to various operations is provided on the side of the operation side housing 2.

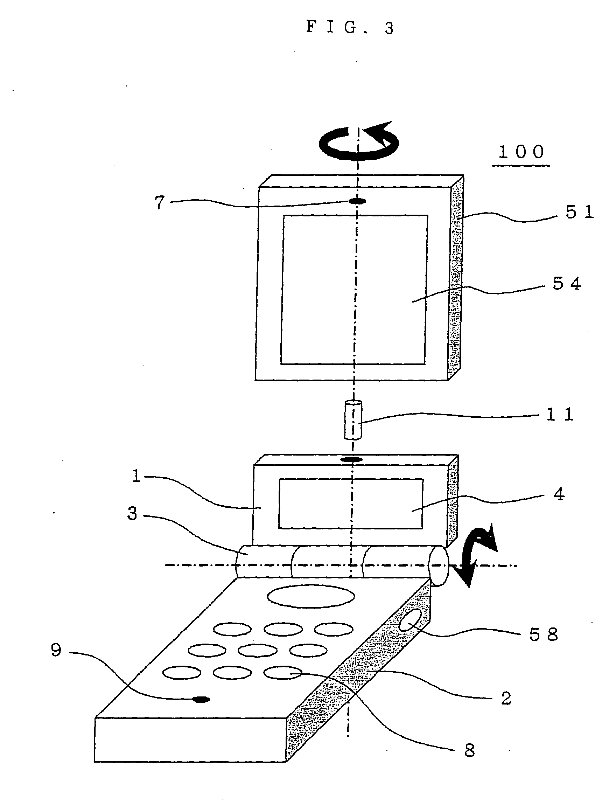

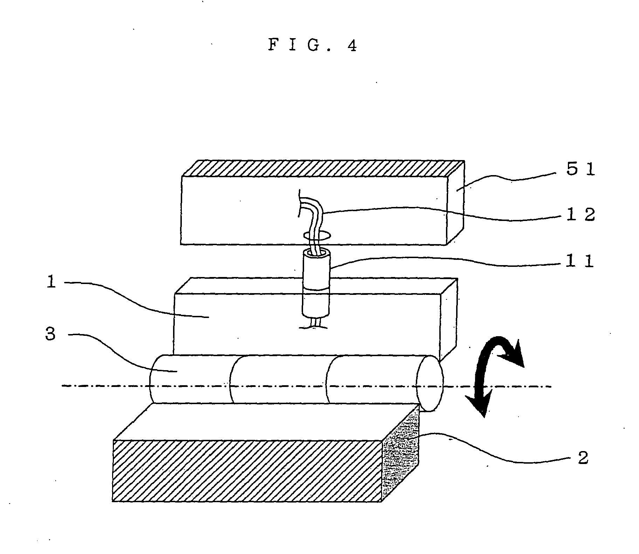

Fig. 3 is a partially exploded view in order to show this structure in detail. As shown in Fig. 3, a rotary shaft 11 is provided between the lower housing 1 and the upper housing 51 of the display side housing 100 in a direction perpendicular to an axis of the hinge 3. Fig. 4 is a view showing a construction or wiring in the vicinity of the rotary shaft 11. The rotary shaft 11 provides a connection between the lower housing 1 and the upper housing 51 forming the display side housing 100, and allows the upper housing 51 to turn so as to be capable of inverting. Moreover, the rotary shaft 11 is pipe-shaped, and a wiring 12 goes through inside the pipe-shaped rotary shaft 11 to serve to electrically connect the lower housing 1 and the upper housing 51.

An imaging device 6 is provided on the backside (on the backside facing to Fig. 1) of the lower housing 1, and a first display 4 is provided on the front side; and the upper housing 51 is provided with a second display 54.

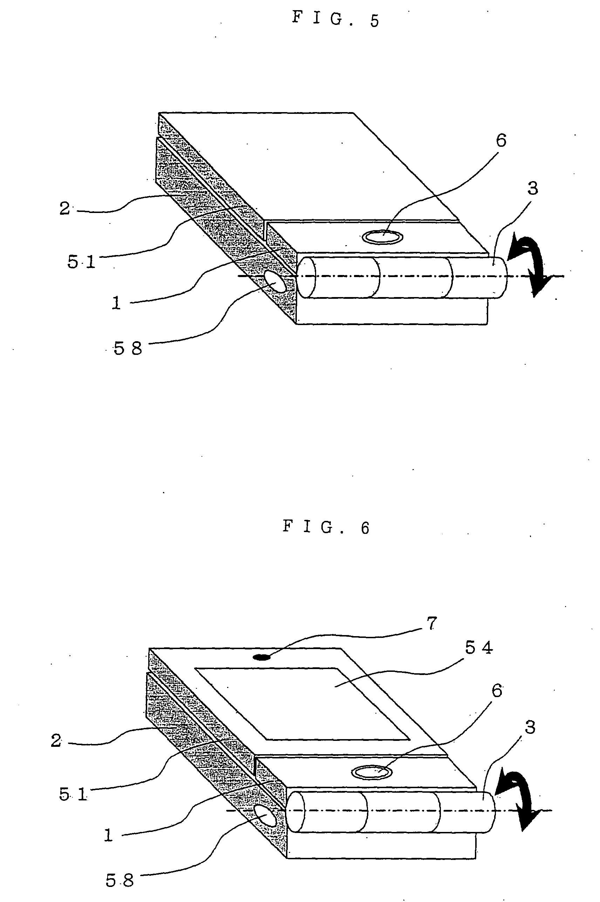

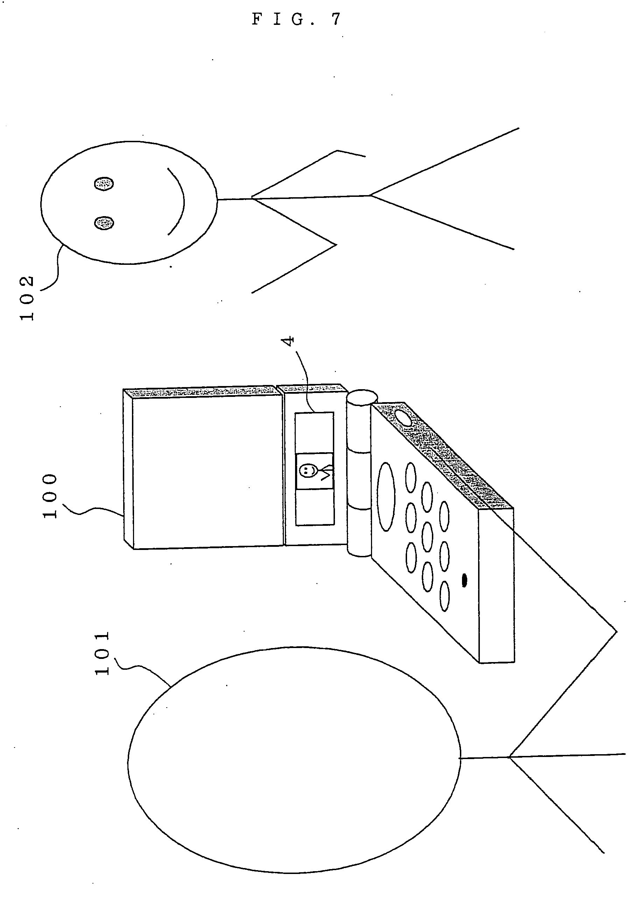

A length scale ratio between the lower housing 1 and the upper housing 51, and a vertical scale ratio between the first display 4 and the second display 54 are arbitrary, and the illustration shows just one example. Fig. 5 is a view showing a state in which the second display 54 is set on the front face side (facing to Fig. 1) to be folded; and Fig. 6 is a view showing a state in which the second display 54 is set on the backside (on the backside with facing to Fig. 1) to be folded.

An image, which is being taken with the imaging device 6, can be displayed simultaneously on both first display 4 and second display 54.

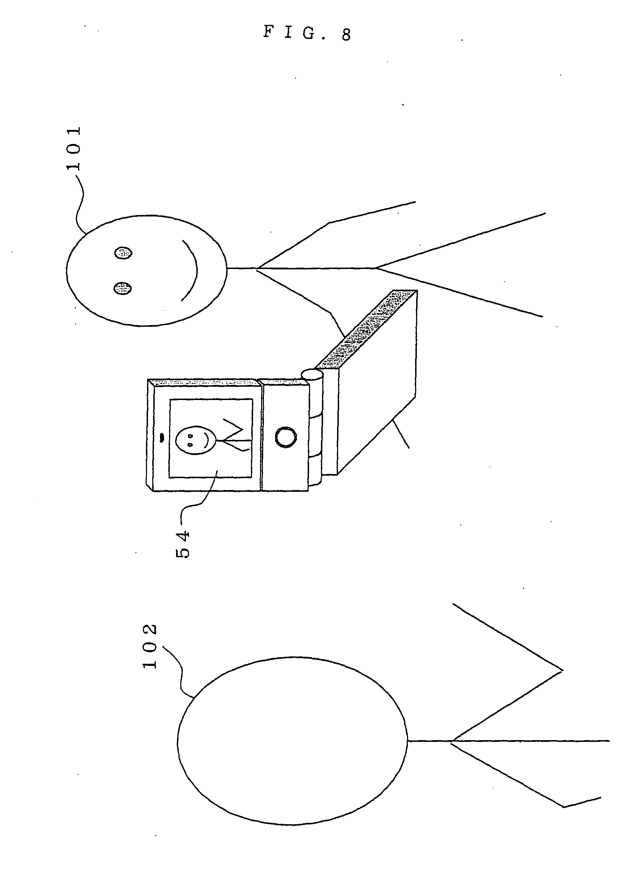

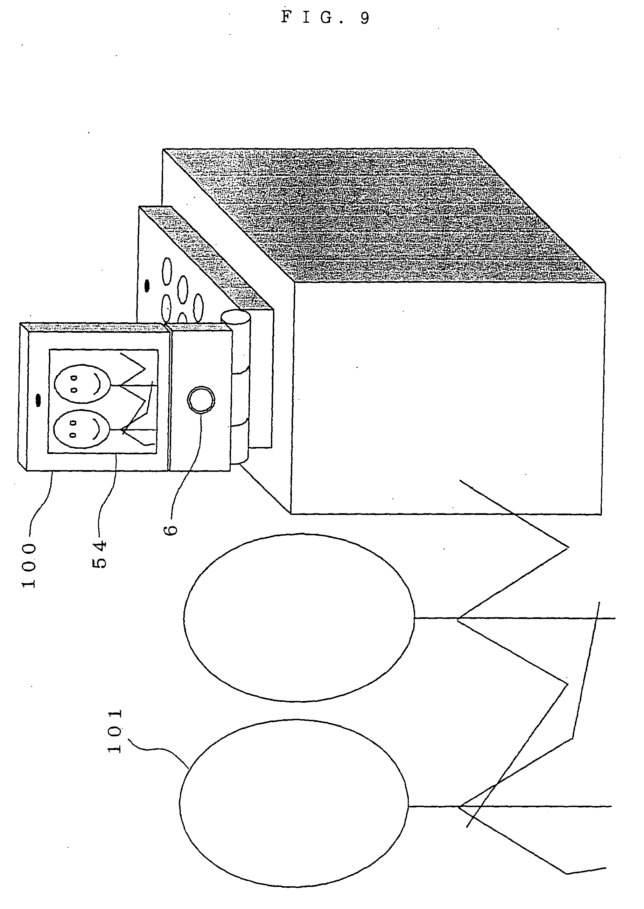

Accordingly, in the case of taking a shot of, e.g., persons in the state in which the second display 54 is faced on the backside and the display side housing 100 and the operation side housing 2 are opened to each other, not only it is possible for a photographer 101 to confirm a subject 102 with the first display 3 as shown in Fig. 7; but also it is possible for a person 102, being a subject to confirm his posture, pose, and expression that is reflected on the second display 54 as shown in Fig. 8. Owing to these features, in the case of taking a shot with the use of self-timer (not shown), first it is possible for a photographer to mount a mobile device on, e.g., a stand while confirming a background or persons to be the other subjects with the first display 4; and subsequently, it is possible for the photographer to confirm his posture, pose, or expression with the second display 54 at the moment the shutter released as shown in Fig. 9. Thus, there will be no such a mistake as to take a picture in which no head is caught.

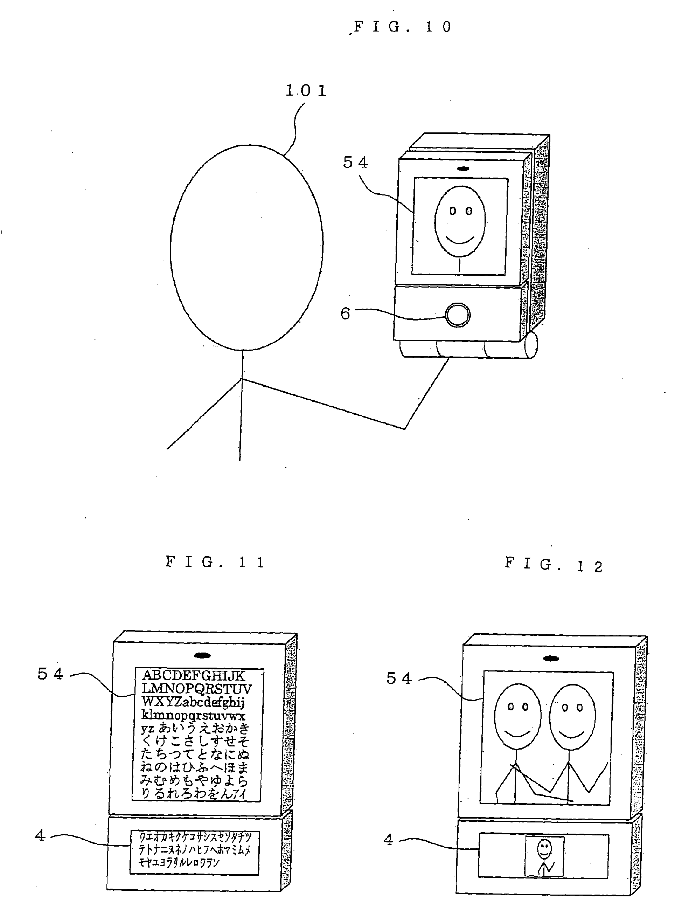

Further, as shown in Fig. 10, it is possible to take one's own picture by pressing the side key 58 on the side of the operation side housing 2 while confirming one's posture, or expression with the second display 54 in the state in which the second display 54 is faced on the backside, and the display side housing 100 is closed with respect to the operation side housing 2.

Furthermore, it is possible to make an audio call, or to cause characters or images such as e-mail, Internet or game to display by arbitrarily selecting either one or both of the first display 4 and the second display 54. Screen operation with the use of both displays is carried out in the state in which the second display 54 is faced on the front side (both the first and second displays are faced in the same direction), and the display side housing 100 and the operation side housing 2 are opened to each other.

A display pattern of characters and images can be the ones shown in Figs. 11 to 16. That is, Fig. 11 shows a pattern of taking a look of character information with both displays of the first display 4 and the second display 54. Fig. 12 shows a pattern in which both displays function as an image display. Fig. 12 provides not only a pattern for use in taking a picture as described above, but also a pattern in which a thumbnail (reduced image) is viewed with one screen and an enlarged image is viewed with the other screen when taking a look of the image having been shot.

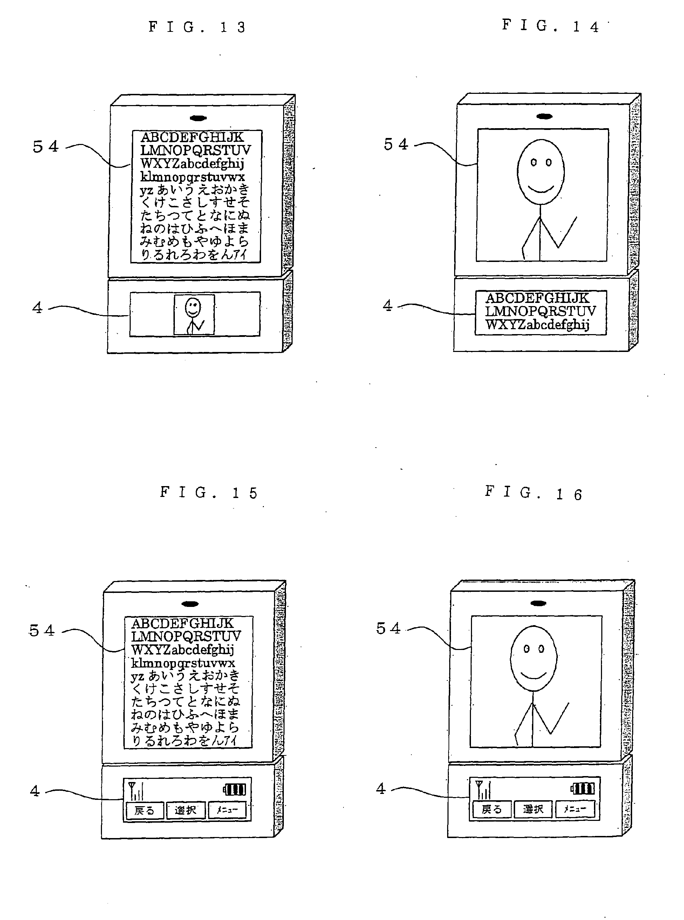

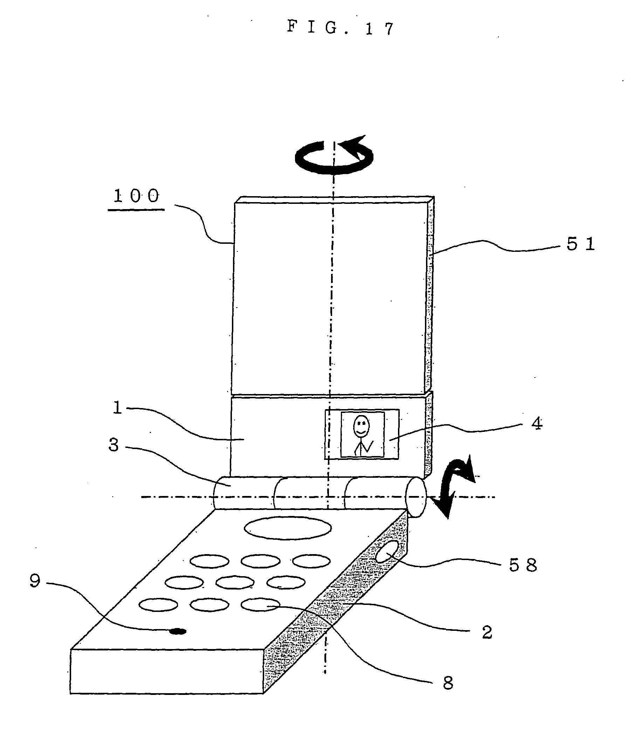

Figs. 13 and 14 show patterns in each of which characters are inputted while viewing an attached image, or an image is viewed while reading mail messages having been received in the transmission/reception of mails by displaying character information on one display, and displaying an image on the other display. It also becomes possible to input or read comments while viewing photographs in the case of saving or taking a look of images having been taken. Figs. 15 and 16 show patterns in which one of the screens is used as a guide screen when transmitting or receiving mails, or taking a picture.

It is possible to see with the second display calling party information, or information regarding, e.g., time or schedule at the time of reception in the folded state, by folding the second display 54 on the backside (outside) as shown in Fig. 6. Further, it also comes to be possible to read mails having been received in the state of being closed, by the simple operation of using the side key 58 located on the side of the operation side housing 2. The position of the side key is not limited to that illustrated, and the side key has only to be located so as to be operated from outside in the folded state.

### Embodiment 2.

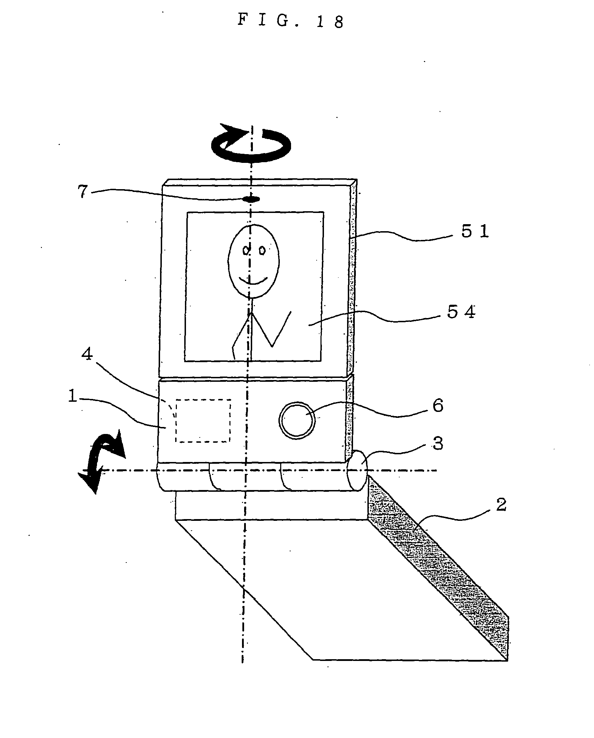

Fig. 17 is a perspective view of a mobile device according to a second preferred embodiment of the invention. Fig. 18 is a view of the mobile device of Fig. 17 taken from the backside. As shown in Figs. 17 and 18, a first display 4 is provided at the position half of one side on the front side of the lower housing 1 of the mobile device according to the invention, and an imaging device 6 is provided at the position half of the other side on the backside (i.e., at the positions where they are not overlapped each other). The connection point where the upper housing 51 is connected to the lower housing 1 so as to be capable of inverting is the same as in the first embodiment.

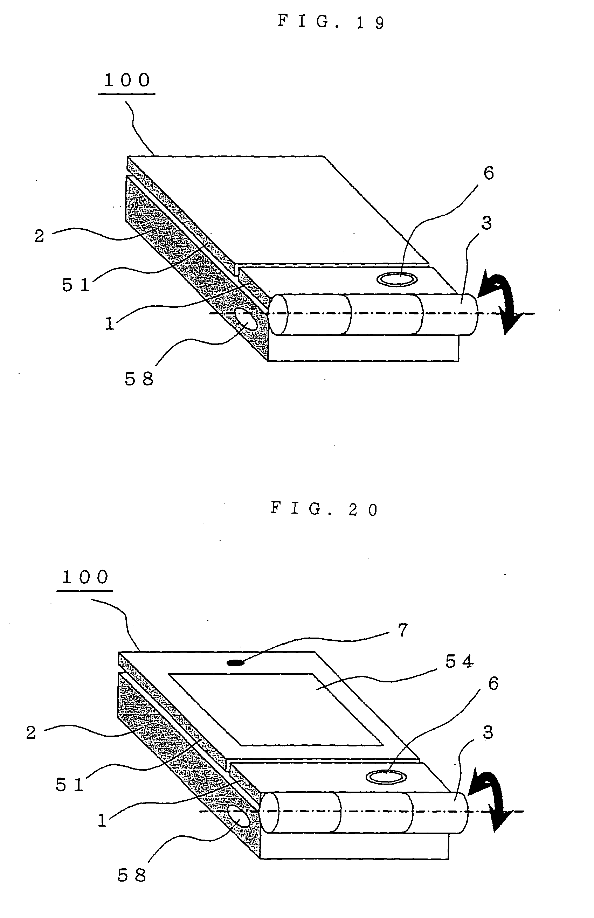

Fig. 19 is a view showing a state in which the second display 54 is set on the front side to be folded. Fig. 20 is a view showing a state in which the second display 54 is set on the backside to be folded.

That is, since the second display 54 of the display side housing 100 can be faced on the backside when the mobile device being folded as shown in Fig. 20, it is unnecessary that any backside sub-display 5 (Fig. 49) is provided in the same manner as in the prior art. Furthermore, owing to the structure that any other part is provided on the backsides of the first display 4 and the imaging device 6, it comes to be possible to make the display side housing 100 thinner. That is, the first display 4 is located on one face, and the imaging device 6 is located at the position, being the backside of the portion of the mentioned face where no first display 4 is located. Alternatively, the first display 4 is located, being pulled to one side of one face, and the imaging device 6 is located at the position, being the backside of the other side portion of the mentioned face.

Further, as shown in Figs. 17 and 18, in the case of taking a picture of persons in the state in which the second display 54 is faced on the backside and the display side housing 100 is opened, not only it is possible for a photographer to confirm a subject with the first display 4; but also it is possible for a person, being a subject, to confirm his posture, pose, or expression to be photographed with the second display 54.

Owing to these features, in the case of taking a picture with the use of self-timer, it is possible for a photographer to mount a mobile device on, e.g., a stand while confirming a background or persons to be the other subjects with the first display 4; and subsequently it is possible for the photographer to confirm his posture, pose, or expression to be photographed with the second display 54 from the subject position. Thus, there will be no such a mistake as to take a picture in which no head is caught. Further, in this state, it is possible to make a normal audio call, or display characters or images such as e-mail, Internet, or game on the first and second displays 4, 54 to do the key operation.

Furthermore, as shown in Fig. 20, it is possible to take one's own picture by pressing the side key 58 on the side of the operation side housing 2 while confirming one's posture or expression with the second display 54 in the state in which the second display 54 is faced on the backside and the display side housing 100 is closed. It is also possible to see calling party information or information regarding, e.g., time at the time of reception; or it also becomes possible to read mails having been received with the display side housing 100 closed by the simple operation of using the side key 58 on the side of the operation side housing 2.

### Embodiment 3.

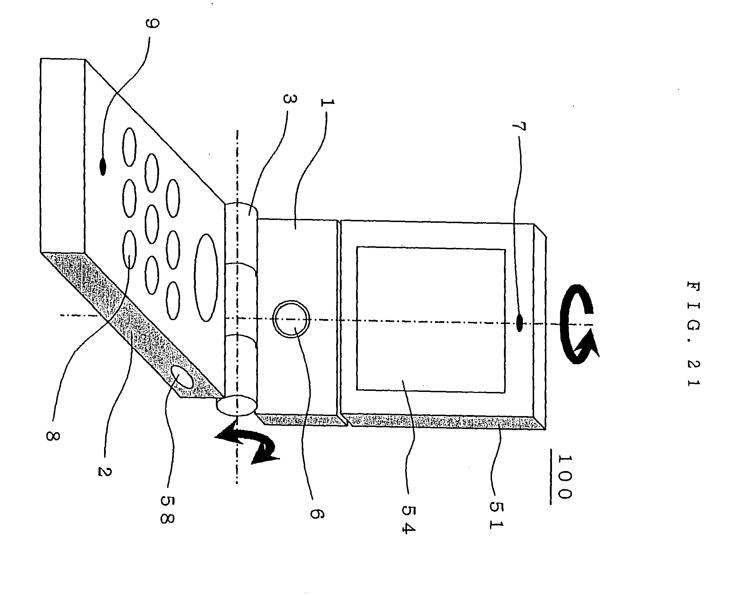

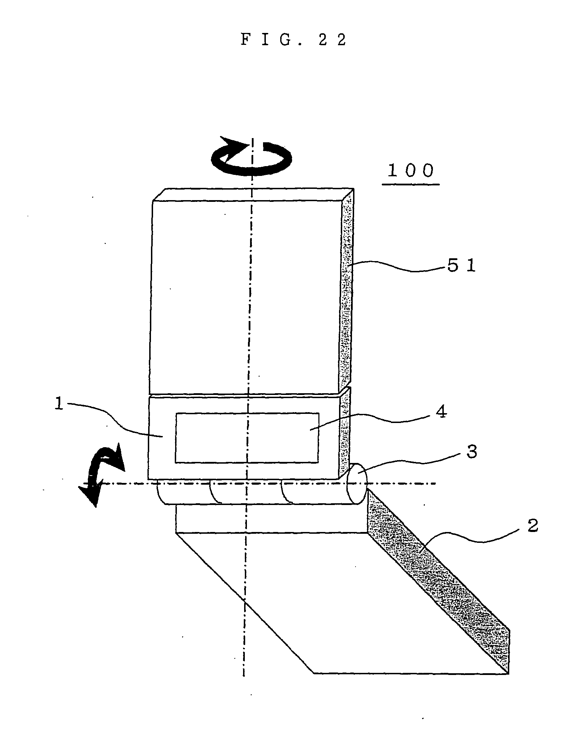

Figs. 21 to 24 are perspective views of a mobile device according to a third embodiment of the invention. Fig. 22 is a view of Fig. 21 taken from the backside.

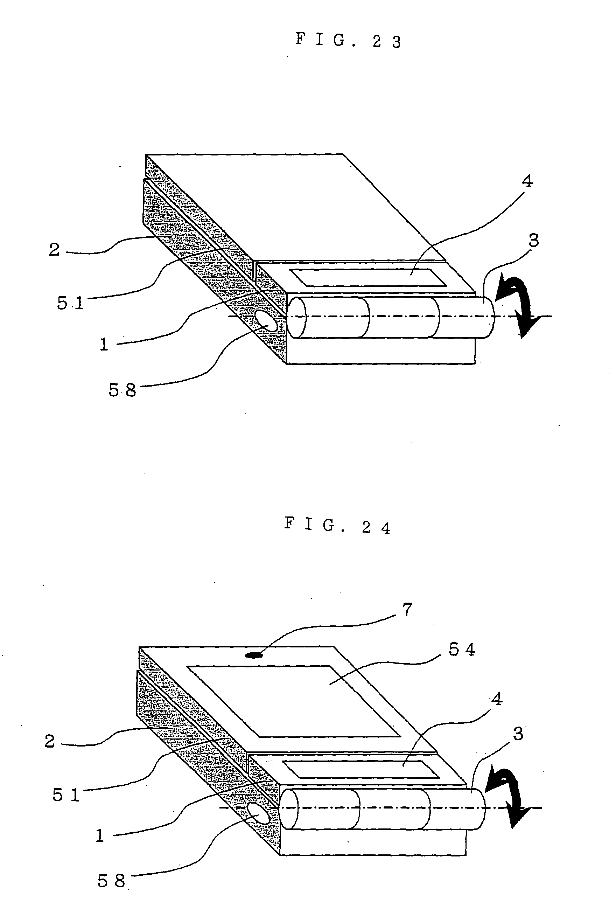

This mobile device is provided with the imaging device 6 on the front side and the first display 4 on the backside of the lower housing 1. Fig. 23 is a view showing a state in which the second display 54 is set on the front side to be folded. Fig. 24 is a view showing a state in which the second display 54 is set on the backside to be folded. The connection point that the upper housing 51 is connected to the lower housing 1 so as to be capable of inverting is the same as in the first embodiment.

That is, in the case of taking a picture of persons in the state in which the second display 54 is faced on the front side and the display housing 100 is opened as shown in Fig. 21, not only it is possible for a photographer to confirm a subject with the first display 4; but also it is possible for a person, being a subject, to confirm his posture, pose, or expression to be photographed with the second display 54.

Further, even in the case of taking a picture with the use of self-timer in the opened state as described above, it is possible for a photographer to mount a mobile device on, e.g., a stand while confirming a background or persons to be the other subjects with the first display 4; and subsequently it is possible for the photographer to confirm his posture, pose, or expression to be photographed with the second display 54 from the subject position. Thus, there will be no such a mistake as to take a picture in which no head is caught.

Furthermore, it is possible to take one's own picture while confirming one's posture or expression with the second display 54 in the closed state as described above. Due to the fact that the imaging device 6 is disposed on the front side, i.e., on the side of the operation key 8, a videophone is easy to perform.
Further, in the opened state as described above, it is possible to make a normal audio call, or to display characters or images such as e-mail, Internet, or game on the second display 54 to do the key operation.

Further, it is possible to see with the first display 4 calling party information or information regarding, e.g., time at the time of reception even in the state in which the second display 54 is faced on the front side, and the display side housing 100 is folded.

Furthermore, it also comes to be possible to read mails having been received in the state of being closed by the simple operation of using the side key 58 on the side of the operation side housing 2 even in the state in which the second display 54 is faced on the backside to be folded as shown in Fig. 24.

### Embodiment 4.

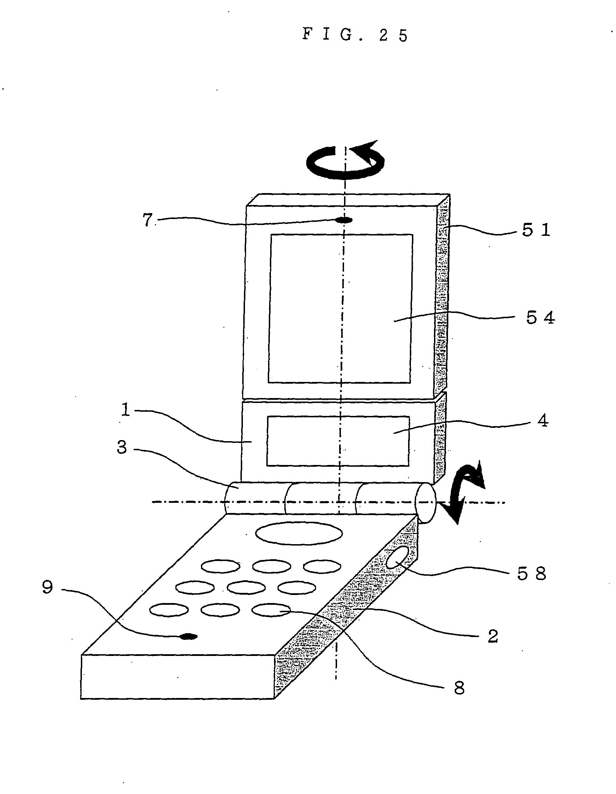

Figs. 25 to 28 are perspective views of a mobile device according to a fourth embodiment of the invention.

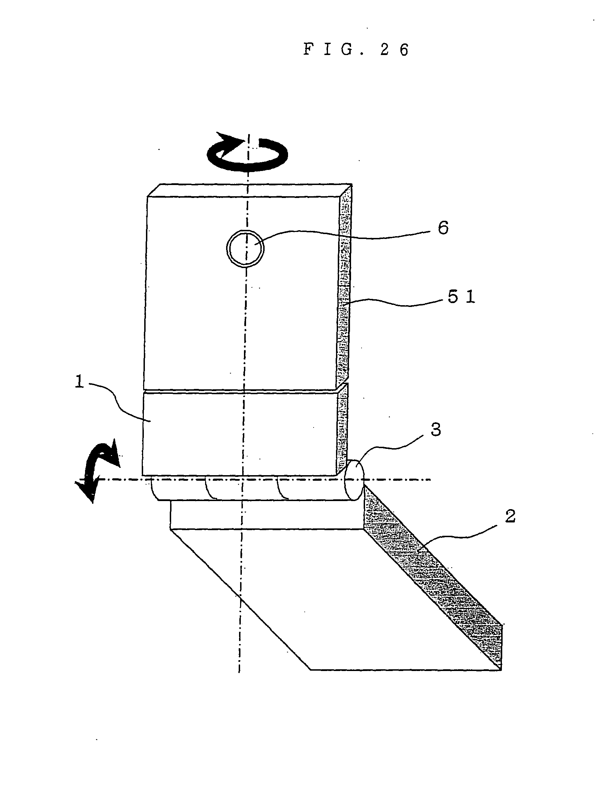

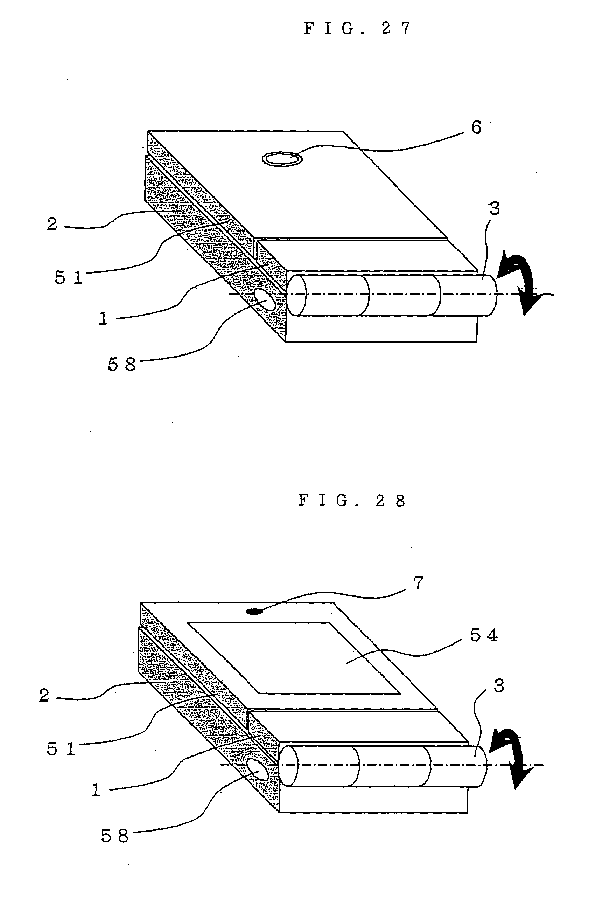

As shown in Fig. 25 and 26, this mobile device is provided with the first display 4 on the front side of the lower housing 1, and with the imaging device on the backside of the second display 54 of the upper housing 51. Fig. 27 shows a state in which the second display 54 is set on the front side to be folded. Fig. 28 shows a state in which the second display 54 is set on the backside to be folded. The connection point that the upper housing 51 is connected to the lower housing 1 so as to be capable of inverting is the same as in the first embodiment.

That is, in the case of taking a picture of persons in the state in which the display side housing 100 is opened with the second display 54 faced on the backside and the imaging device 6 faced on the front side, not only it is possible for a photographer to confirm a subject with the second display 4; but also it is possible for a person, being a subject, to confirm with the first display 4 his posture, pose, or expression to be photographed.

Further, even in the case of taking a picture with the use of self-timer, it is possible for a photographer to mount a mobile device, on e.g., a stand while confirming a background or persons to be the other subjects with the second display 54; and it is possible for the photographer to confirm his posture, pose, or expression with the first display 4 from the subject position. Thus, there will be no such a mistake as to take a picture in which no head is caught.

Furthermore, although not shown, it is possible to take one's own picture while confirming one's posture or expression with the first display 4 in the state in which the display side housing 100 is opened with the second display 54 of the display side housing faced on the backside, that is, the imaging device 6 faced on the front side. Due to the fact that the imaging device is disposed on the front side, i.e., on the side of the operation key, a videophone is easy to perform.

Further, in the state in which the second display 54 of the display side housing 100 is faced on the front side and the display side housing 100 is opened as shown in Fig. 25, it is possible to make a normal audio call, or to display characters or images such as e-mail, Internet, or game on the second display 54 and the first display 4 to do the key operation.

Further, by causing the second display 54 to face on the backside, it is possible to see calling party information or information regarding, e.g., time at the time of reception even in the state in which the mobile device is folded as sown in Fig. 28. Furthermore, it also comes to be possible to read mails having been received in the state of being closed by the simple operation of using the side key 58 on the side of the operation side housing 2.

### Embodiment 5.

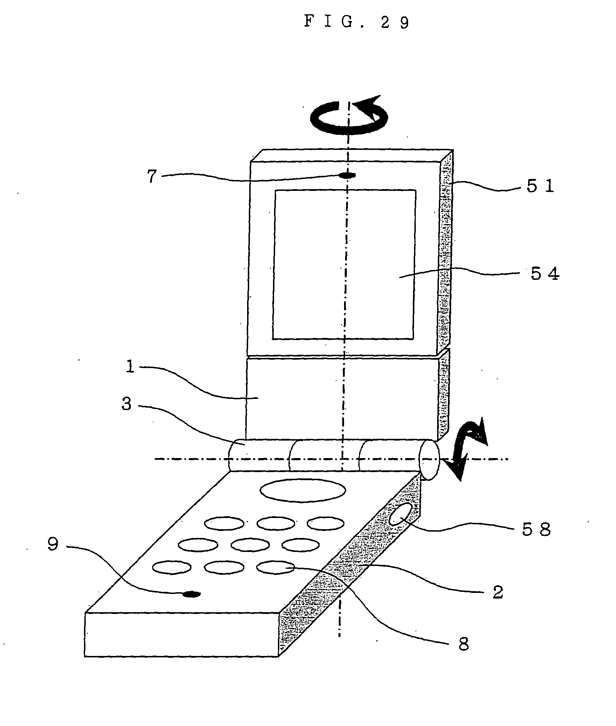

Figs. 29 to 32 are perspective views of a mobile device according to a fifth embodiment of the invention.

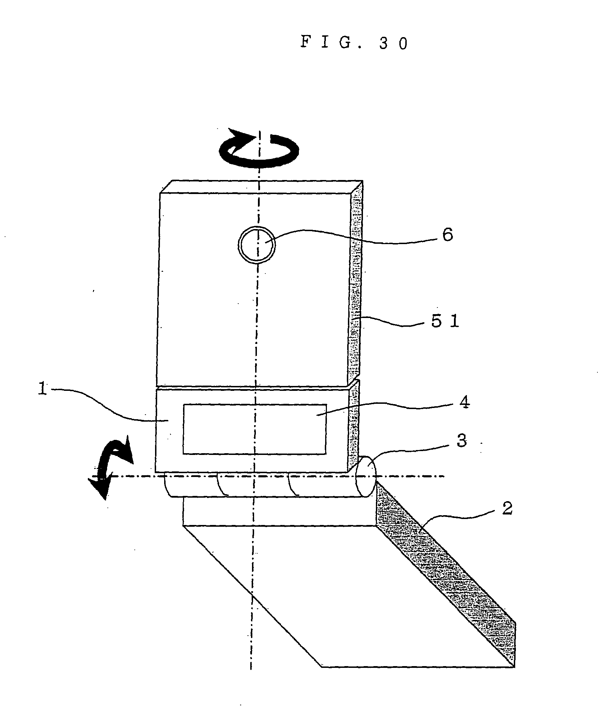

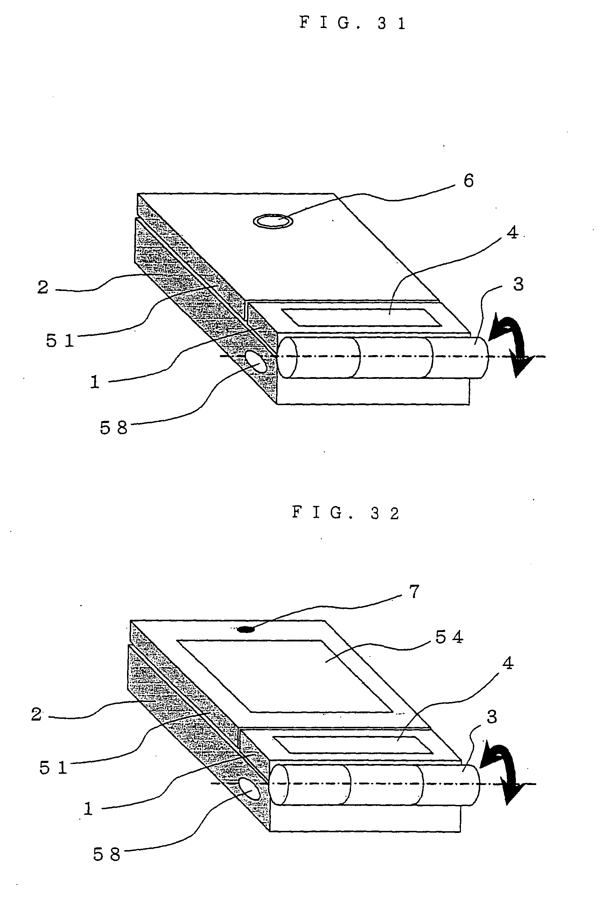

As shown in Figs. 29 and 30, this mobile device is provided with the first display 4 on the backside of the lower housing 1, and with the imaging device 6 on the backside of the second display 54 of the upper housing 51. Fig. 31 shows a state in which the second display 54 is set on the front side to be folded. Fig. 32 shows a state in which the second display 54 is set on the backside to be folded. The connection point that the upper housing 51 is connected to the lower housing 1 so as to be capable of inverting is the same as in the first embodiment.

That is, in the case of taking a picture of persons in the state in which the display side housing 100 is opened with the second display 54 faced on the front side and the imaging device 6 faced on the backside as shown in Fig. 29, not only it is possible for a photographer to confirm a subject with the second display 4; but also it is possible for a person, being a subject, to confirm with the first display 4 his posture, pose, or expression to be photographed.

Further, even in the case of taking a picture with the use of self-timer in the opened state as described above, it is possible for a photographer to mount a mobile device on, e.g., a stand while confirming a background or persons to be the other subjects with the second display 54; and subsequently it is possible for the photographer to confirm his posture, pose, or expression to be photographed with the first display 4 from the subject position. Thus, there will be no such a mistake as to take a picture in which no head is caught.

Furthermore, it is possible to take one's own picture by pressing the side key 58 on the side of the operation side housing 2 while confirming one's posture or expression with the first display 4 in the state in which the display side housing 100 is closed with the second display 54 faced on the front side and the imaging device 6 faced on the backside as shown in Fig. 29.

Further, in the state in which the display side housing 100 is opened with the second display 54 faced on the front side as shown in Fig. 29, it is possible to make a normal audio call, or to display characters or images such as e-mail, Internet, or game on the second display 54 to do the key operation.

Further, by causing the second display 54 to face on the backside, it is possible to see calling party information or information regarding, e.g., time at the time of reception even in the state of being folded as shown in Fig. 32. Furthermore, it also comes to be possible to read mails having been received in the state of being closed by the simple operation of using the side key 58 on the side of the operation side housing 2.

Further, in the state in which the second display 54 is faced on the front side and the display side housing 100 is opened, it is possible to make a normal audio call, or to display characters or images such as e-mail, Internet, or game on the second display 54 and the first display 4 to do the key operation while viewing display.

### Embodiment 6.

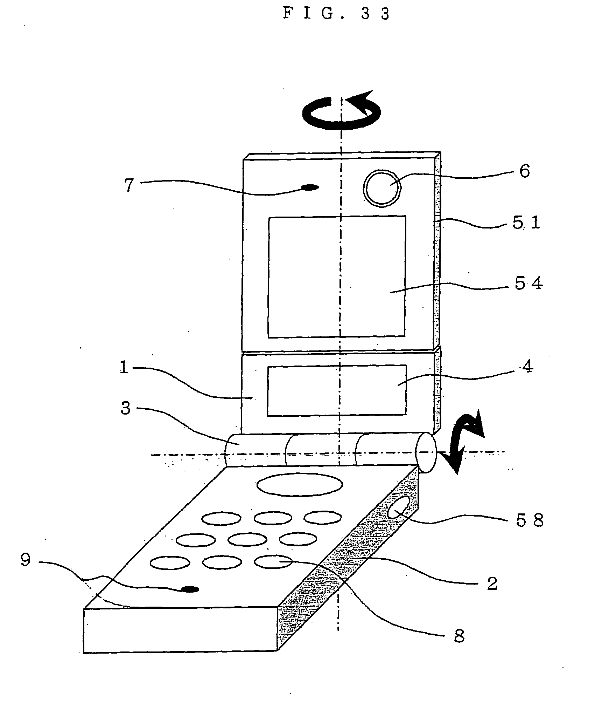

Figs. 33 to 36 are perspective views of a mobile device according to a sixth embodiment of the invention.

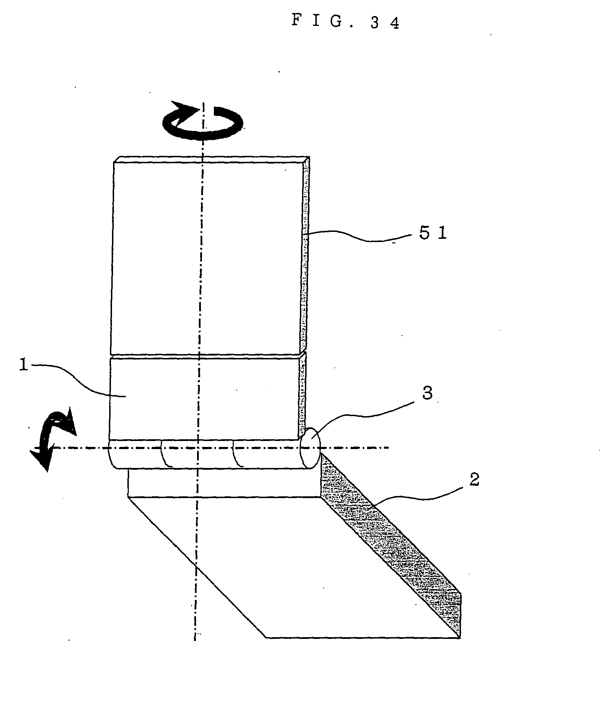

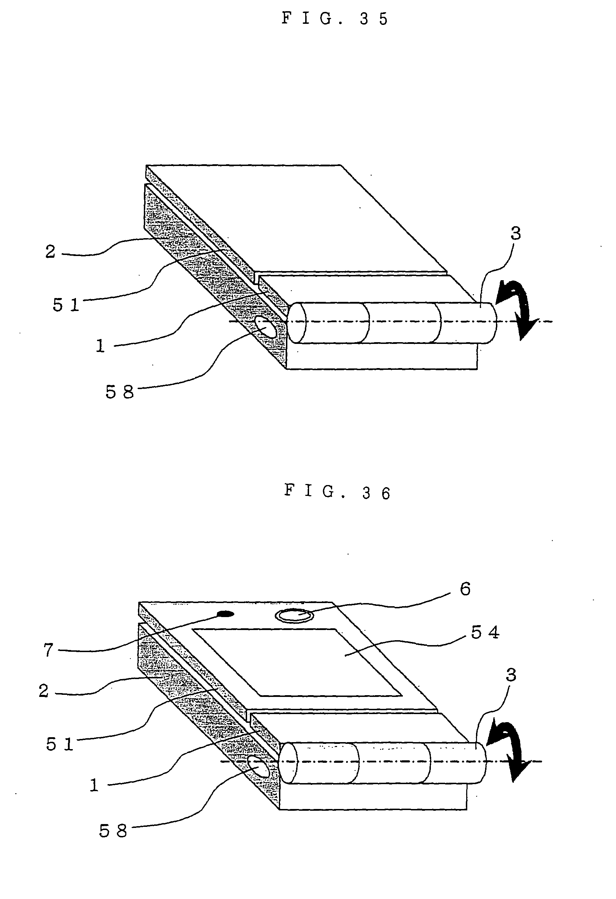

As shown in Figs. 33 and 34, the first display 4 is provided on the front side of the lower housing 1 of the display side housing 100. The mobile device is provided with the imaging device 6 on the same face in the same direction as the second display 54 of the upper housing 51. Fig. 35 shows a state in which the second display 54 is set on the front side to be folded. Fig. 36 shows a state in which the second display 54 is set on the backside to be folded. The connection point that the upper housing 51 is connected to the lower housing 1 so as to be capable of inverting is the same as in the first embodiment.

That is, although not shown, in the case of taking a picture of persons in the state in which the display side housing 100 is opened with the second display 54 faced on the backside, that is, the imaging device 6 is also faced on the backside, not only it is possible for a photographer to confirm a subject with the first display 4; but also it is possible for a person, being a subject, to confirm with the second display 54 his posture, pose, or expression to be photographed.

Further, even in the case of taking a picture with the use of self-timer in the opened state as described above, it is possible for a photographer to mount a mobile device on, e.g., a stand while confirming a background or persons to be the other subjects with the first display 4; and it is possible for the photographer to confirm his posture, pose, or expression to be photographed with the second display 54 from the subject position. Thus, there will be no such a mistake as to take a picture in which no head is caught.

Furthermore, it is possible to take one's own picture while confirming one's posture or expression with the second display in the state in which the display side housing 100 is opened with the second display 54 of the display side housing 100 faced on the front side, and the imaging device 6 is also faced on the front side as shown in Fig. 33. Further, due to the fact that the imaging device is disposed on the front side, i.e., on the side of the operation key, videophone is easy to perform. It is also possible to confirm one's face with the first display 4 as a face of the calling party is confirmed with the second display 54.

Further, it is possible to take one's own picture by pressing the side key 58 on the side of the operation side housing 2 while confirming one's posture or expression with the second display 54 even in the state in which the display side housing 100 is closed with the second display 54 faced on the backside, that is, the imaging device 6 faced on the backside as shown in Fig. 36.

Further, in the state in which the second display 54 is faced on the front side and the display side housing 100 is opened as shown in Fig. 33, it is possible to make a normal audio call, or to display characters or images such as e-mail, Internet, or game on the second display 54 and the first display 4 to do the key operation.

Further, by causing the second display 54 of the display side housing 100 to face on the backside, it is possible to see calling party information or information regarding, e.g., time at the time of reception even in the state of being folded as shown in Fig. 36; or it also comes to be possible to read mails having been received in the state of being closed by the simple operation of using the side key 58 on the side of the operation side housing 2.

### Embodiment 7.

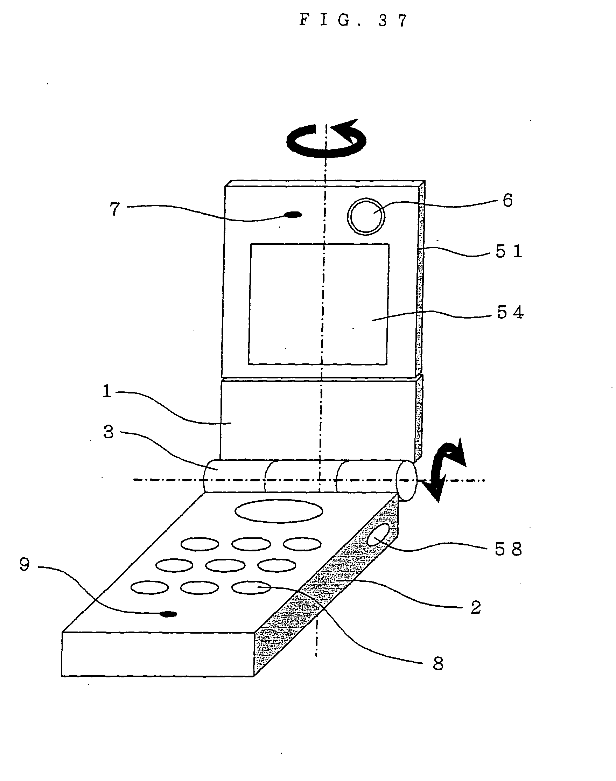

Figs. 37 to 40 are perspective views of a mobile device according to a seventh embodiment of the invention.

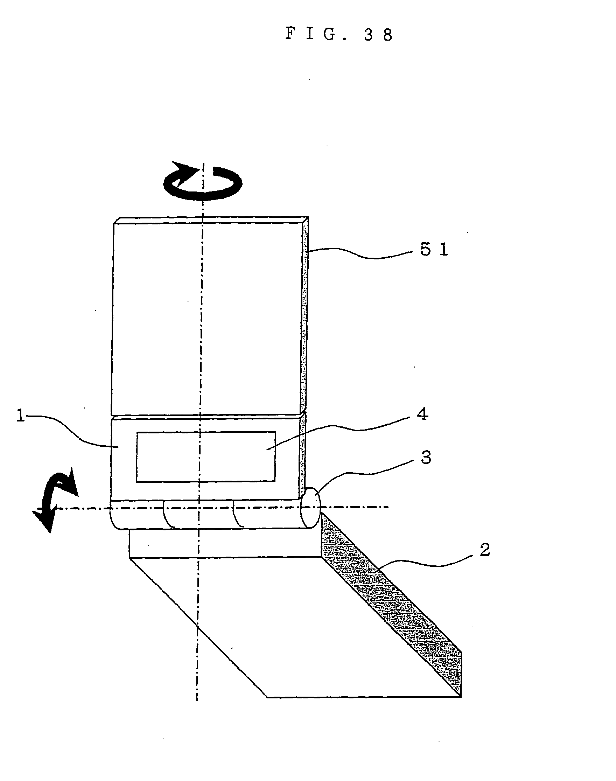

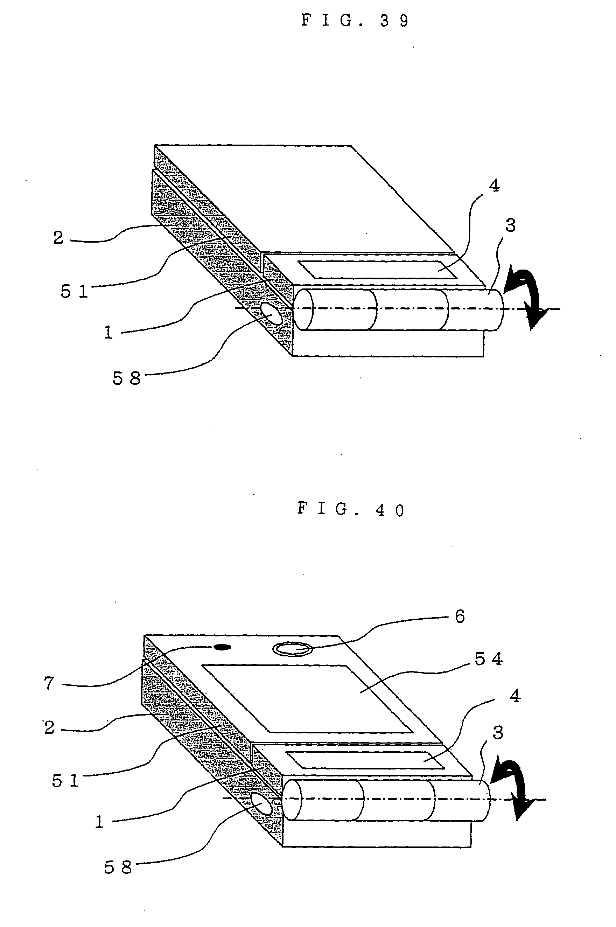

As shown in Figs. 37 and 38, the first display 4 is provided on the backside of the lower housing 1, and the mobile device is provided with the imaging device 6 on the same face in the same direction as the second display 54 of the upper housing 51. Fig. 39 shows a state in which the second display 54 is set on the front side to be folded. Fig. 40 shows a state in which the second display 54 is set on the backside to be folded. The connection point that the upper housing 51 is connected to the lower housing 1 so as to be capable of inverting is the same as in the first embodiment.

That is, in the case of taking a picture of persons in the state in which the display side housing 100 is opened with the second display 54 faced on the front side, that is, the imaging device 6 is also faced on the front side as shown in Fig. 37, not only it is possible for a photographer to confirm a subject with the first display 4; but also it is possible for a person, being a subject, to confirm with the second display 54 his posture, pose, or expression to be photographed.

Further, even in the case of taking a picture with the use of self-timer in the opened state as described above, it is possible for a photographer to mount a mobile device on, e.g., a stand while confirming a background or persons to be the other subjects with the first display 4; and subsequently it is possible for the photographer to confirm his posture, pose, or expression to be photographed with the second display 54 from the subject position. Thus, there will be no such a mistake as to take a picture in which no head is caught.

Furthermore, it is possible to take one's own picture while confirming one's posture or expression with the second display in the state in which the display side housing 100 is opened with the second display 54 faced on the front side, that is, the imaging device 6 is also faced on the front side as shown in Fig. 37. Further, due to the fact that the imaging device is disposed on the front side, i.e., on the side of the operation key 8, videophone is easy to perform.

Further, it is possible to take one's own picture by pressing the side key 58 on the side of the operation side housing 2 while confirming one's posture or expression with the second display 54 even in the state in which the display side housing 100 is closed with the second display 54 faced on the backside, that is, the imaging device 6 also is faced on the backside as shown in Fig. 40. Further, in the state in which the second display 54 is faced on the front side and the display side housing 100 is opened as shown in Fig. 37, it is possible to make a normal audio call, or to display characters or images such as e-mail, Internet, or game on the second display 54 to do the key operation.

Furthermore, by causing the second display 54 to face on the backside, it is possible to see calling party information or information regarding, e.g., time at the time of reception even in the state of being folded as shown in Fig. 40. Further, it also comes to be possible to read mails having been received in the state of being closed by the simple operation of using the side key 58 on the side of the operation side housing 2.

### Embodiment 8.

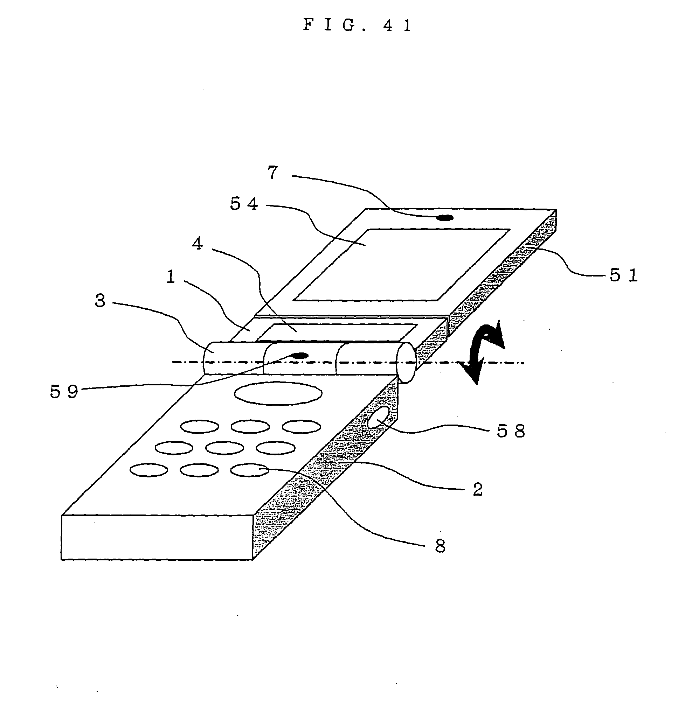

Figs. 41 to 44 are perspective views of a mobile device according to a fourth embodiment of the invention.

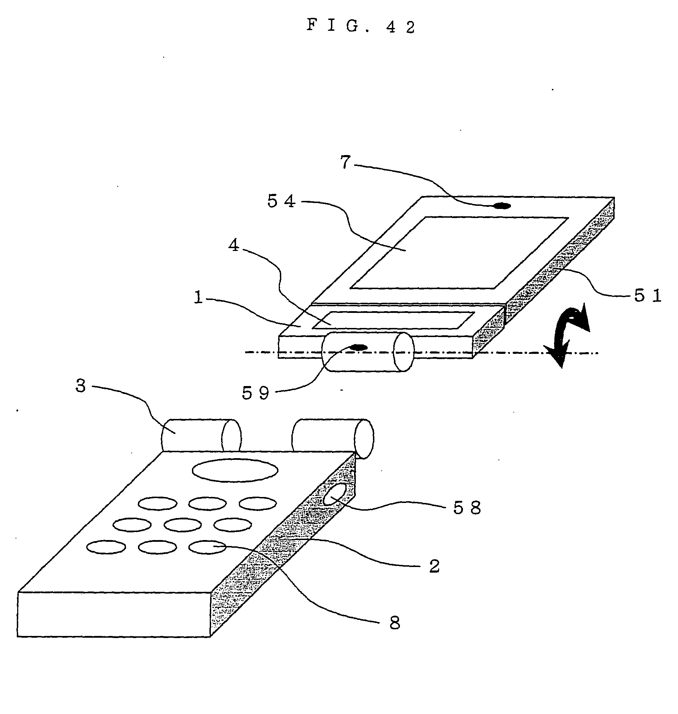

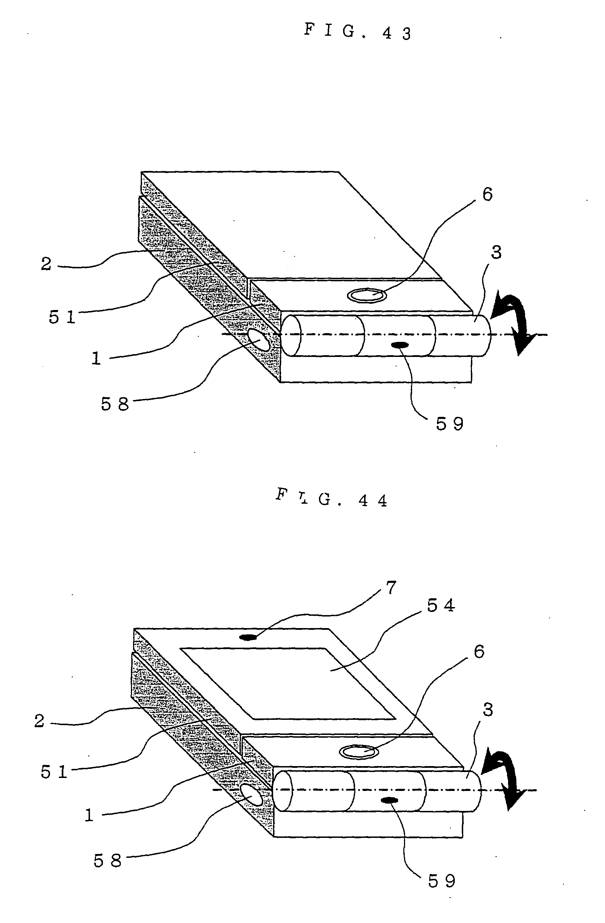

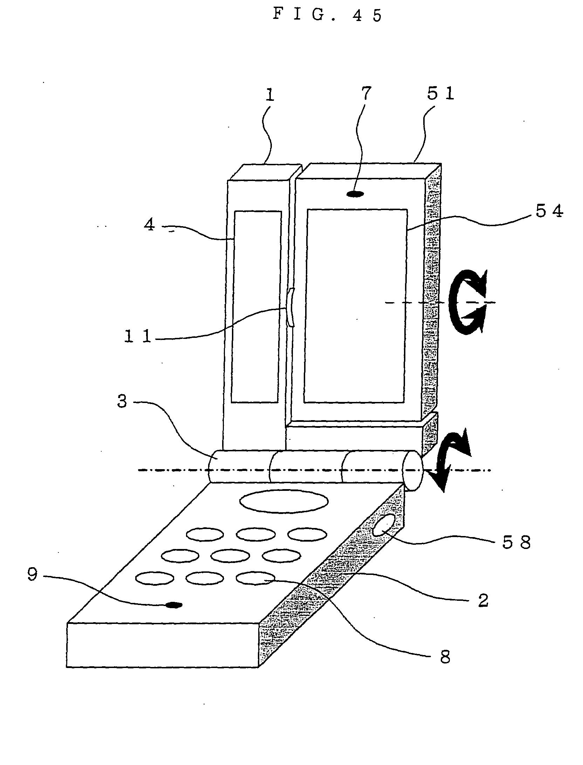

As shown in Figs. 41 and 42, this mobile device is provided with a receiver 7 above the second display 54 of the upper housing 51 (at the end portion remote from the hinge), and a transmitter 59 at the hinge of the lower housing 1 (at the position where the transmitter comes on the front in the state of being opened and comes out on the outside in the state of being closed). The side key 58 is provided on the side of the operation side housing 2. Fig. 43 shows a state in which the second display 54 and the receiver 7 are set on the front side to be folded. Fig. 44 shows a state in which the second display 54 and the receiver 7 are set on the backside to be folded. The connection point that the upper housing 51 is connected to the lower housing 1 so as to be capable of inverting is the same as in the first embodiment.

That is, by directing the receiver 7 and the transmitter 59 in the same direction in the state in which the second display 54 and the receiver 7 are faced on the front side and the display housing 100 is opened, it is possible to make a normal audio call. Furthermore, not only it is possible to see calling party information or information regarding, e.g., time at the time of reception, or to read mails having been received with the second display 54 even in the folded state as shown in Fig. 44; but also it is possible to make an audio call by the simple operation of using the side key 58 on the side of the operation side housing 2 in the state of being folded at the time of incoming call owing to the fact that the transmitter 59 is turned by the turning action of the hinge as the mobile device is folded to be exposed on the back side.

This mechanism is applicable to all foldable mobile devices that include a display side housing formed into a structure like the upper housing 51.

### Embodiment 9.

In the first to eighth embodiments, as shown in Fig. 3, the rotary shaft 11 of the upper housing 54 is described on the supposition that the rotary shaft 11 is in a direction perpendicular to the rotary shaft of the hinge 3. However, the requirement is that a display surface of the second display 54 of the upper housing 51 has only to invert with respect to a display surface of the first display of the lower housing 1. Thus, for example, it is preferable that an axis of the rotary shaft 11 is parallel with an axis of the hinge 3 as shown in Fig. 45. The structure of Fig. 45 is applicable to all of Fig. 1 showing the first embodiment to Fig. 44 showing the eighth embodiment.

Additionally, in all of the above-mentioned embodiments, a display that comes on inside and cannot be seen from outside when the display side housing 100 is folded, is arranged so as to be automatically vanished as a matter of course.

### Embodiment 10.

With reference to Figs. 18, 19 and 20 of the third embodiment, it is preferable that the imaging device 6 is located on the same face as the first display 4. In this case, the imaging device 6 and the first display 4 are disposed at both end portions on one face of the lower housing respectively.

A mobile device according to the present invention is not limited to a mobile phone, but can be used as a mobile radio set or a mobile.

## Claims

1. A mobile device according to the invention comprises:
a body (2) including an operation section (8);
a lower housing (1) that has front-back two faces, includes on one face a first display (4) capable of displaying an image, and is connected to said body (2) via a hinge so as to be foldable:
an upper housing (51) that has front-back two faces, includes on one face a second display (54) capable of displaying an image, and is connected to the mentioned lower housing (1) via an inverting mechanism (11) inverting about a shaft substantially parallel with a face of said first display; and
an imaging device (6), which is mounted onto either of said lower housing or of said upper housing, and in which image taking is operated by said operation section and an image having been taken is displayed on said first display or said second display.

2. The mobile device according to claim 1, wherein said first display (4) is provided on a face of the side adjacent to said body (2) when said lower housing (1) is folded; and said imaging device (6) is provided on the backside of a face on which said first display (4) of said lower housing is located.

3. The mobile device according to claim 2,wherein said first display is located on one face of said lower housing; and said imaging device (6) is located on the backside of the portion of said one face of said lower housing where there is no said first display.

4. The mobile device according to claim 2, wherein said first display is located at one end portion on one case of said lower housing; and said imaging device (6) is located on the backside of the other end portion of said one face of said lower housing.

5. The mobile device according to claim 1, wherein said imaging device (6) is provided on the backside of a face on which said second display (54) of said upper housing (51) is located.

6. The mobile device according to claim 1, wherein said imaging device (6) is provided on a face on which said second display (54) of said upper housing (51) is located.

7. The mobile device according to claim 1, wherein said imaging device (6) is provided on a face where said first display (4) of said lower housing (1) is located.

8. The mobile device according to claim 7, wherein said first display is located at one end portion on one face of said lower housing; and said imaging device (6) is located at the other end of said one face.

9. The mobile device according to claim 1, further comprising: communication means (99); a receiver (7) that is connected to said communication means, and is located at said upper housing (51); and a transmitter (59) that is located on said hinge (3), which is connected to said communication means, and which comes on the outside when said lower housing is folded, and comes on the inside when said lower housing is opened, and that enables to transmit in the state in which said lower housing is folded.
